# EUROPÄISCHE PATENTSCHRIFT

(11) **EP 0 970 396 B1**
(45) Veröffentlichungstag und Bekanntmachung des Hinweises auf die Patenterteilung: **22.09.2004**
(21) Anmeldenummer: 98928091.2
(22) Anmeldetag: 26.03.1998
(51) Int. Cl.: G02B 6/10

(54) **FASER-INTEGRIERTE PHOTONENKRISTALLE UND -SYSTEME**
FIBER-INTEGRATED PHOTON CRYSTALS AND SYSTEMS
SYSTEMES ET CRISTAUX PHOTONIQUES INTEGRES A UNE FIBRE

(30) Priorität: 29.03.1997 DE 19713371
(43) Veröffentlichungstag der Anmeldung: 12.01.2000
(73) Patentinhaber: Deutsche Telekom AG, 53113 Bonn (DE); OFT Associates, Avon, CT 06001 (US)
(72) Erfinder: MELTZ, Gerald, Avon, CT 06001 (US); KOOPS, Hans, W., P., D-64372 Ober-Ramstadt (DE)
(74) Vertreter: Gornott, Dietmar, Dipl.-Ing.
(86) Internationale Anmeldenummer: PCT/DE1998/000905
(87) Internationale Veröffentlichungsnummer: WO 1998/044367

(56) Entgegenhaltungen:
- KOOPS H W P: "PHOTONIC CRYSTALS BUILT BY THREE-DIMENSIONAL ADDITIVE LITHOGRAPHY ENABLE INTEGRATED OPTICS OF HIGH DENSITY" PROCEEDINGS OF THE SPIE, Bd. 2849, 5. August 1996, Seiten 248-256, XP000617864 in der Anmeldung erwähnt
- KNIGHT J C ET AL: "ALL-SILICA SINGLE-MODE OPTICAL FIBER WITH PHOTONIC CRYSTAL CLADDING" OPTICS LETTERS, Bd. 21, Nr. 19, 1. Oktober 1996, Seiten 1547-1549, XP000630414
- KRAUSS T F ET AL: "OPTICAL CHARACTERIZATION OF WAVEGUIDE BASED PHOTONIC MICROSTRUCTURES" APPLIED PHYSICS LETTERS, Bd. 68, Nr. 12, 18. März 1996, Seiten 1613-1615, XP000582346

## Beschreibung

### Technisches Gebiet

Die vorliegende Erfindung betrifft optische Verarbeitungssysteme, die direkt in und auf optischen Fasern gebildet werden, und beinhaltet Photonenkristalle, die direkt im Lichtweg einer optischen Faser gebildet werden.

### Stand der Technik

Bekanntlich kann man mit Photonenkristallen wellenlängenabhängige Filter, Strahlenteiler, Spiegelkomponenten und rechtwinklige Wellenleiter zur Verfügung stellen. Als Beispiel hierfür sei verwiesen auf A. Mekis, et al., "High Transmission Through Sharp Bends in Photonic Crystal Waveguides", Physical Review Letters, V. 77, N. 18, 28 October 1996, pp. 3787-3790, und auf H. W. P. Koops, "Photonic Crystals Built by 3-Dimensional Additive Lithography Enable Integrated Optics of High Density", in Photorefractive Fiber and Crystal Devices; Materials, Optical Properties, and Applications II, (F.T.S. Yu, S. Yen, Editors) Proceedings Society Photographic and Instrumentation Engineering, Volume 2849, August 1966, pp. 248-256. Weil Photonenkristalle jeweils in zwei Hauptdimensionen in der Größenordnung von mehreren Wellenlängen liegen und unter Einsatz von Mikrobearbeitungstechniken hergestellt werden, können optische Verarbeitungssysteme, bei denen Photonenkristalle verwendet werden, extrem klein sein und dadurch eine extrem hohe Bitdichte und hohe Verarbeitungsdatenraten ermöglichen.

Wie bereits von Koops (a.a.O.) herausgestellt wurde, liegt ein Hauptnachteil in dem gewaltigen Problem der Kopplung von Licht zwischen Wellenleitern und Photonenkristallen.

### Darstellung der Erfindung

Die Gegenstände der Erfindung umfassen das Koppeln von Licht direkt zwischen optischen Wellenleitern und Photonenkristallen, die Bereitstellung von optischen Signalprozessoren, die optische Signale bei minimalen Verlusten manipulieren, optische Signalverarbeitung, die mit einem Minimum an beigeordneten Vorrichtungen realisiert wird, und integrierte optische Signalverarbeitungssysteme in Mikrominiaturausführung.

Nach der vorliegenden Erfindung wird ein Photonenkristall direkt im Lichtweg innerhalb einer optischen Faser gebildet, wodurch das Licht direkt zwischen dem von der Faser gebildeten optischen Wellenleiter und dem von dem Photonenkristall gebildeten optischen Signalprozessor gekoppelt wird. Nach einer Form der Erfindung wird ein Schlitz oder grabenförmiger Einschnitt von einer äußeren Kante einer optischen Faser durch einen bedeutenden Teil der Faser und bis in und über den Faserkern hinaus gebildet, und der optische Kristall wird in diesem Raum gebildet, was zur Folge hat, daß er sich direkt im Weg des Lichtes befindet, das durch die optische Faser hindurchgeht.

In der ersten Realisierung kann der Photonenkristall vorzugsweise aus dielektrischen Stäbchen gebildet werden, die zum Beispiel unter Einsatz von dreidimensionaler additiver Lithographie in einem definierten geometrischen Muster gebildet werden, das die Kenndaten, Wellenlänge und Bandbreite der resultierenden Photonenkristallvorrichtung bestimmt. Nach einer anderen Form der Erfindung wird ein Photonenkristall direkt in einer optischen Faser gebildet, indem im wesentlichen zylindrische säulenförmige Löcher in ein Photonenkristallmuster, das vom gewünschten Effekt und den gewünschten Wellenlängen abhängt, direkt bis in die optische Faser gebohrt werden, und zwar von einer Außenkante durch einen bedeuten Teil der Faser bis in und über den Faserkern hinaus.

Nach der Erfindung enthalten die Zwischenräume zwischen den in einem grabenförmiger Einschnitt innerhalb einer optischen Faser gebildeten dielektrischen Stäbchen einen nichtlinearen optischen Werkstoff, der eine elektrisch steuerbare oder optisch steuerbare Dielektrizitätskonstante hat, um in der Wellenlänge steuerbare Photonenkristalle bereitzustellen, zum Beispiel für den Einsatz als selektiv betreibbarer Schalter.

Darüber hinaus können nach der Erfindung innerhalb einer optischen Faser Photonenkristalle zusammen mit anderen Photonenkristallen oder anderen optischen Vorrichtungen gebildet werden, um so mikrooptische Systeme direkt in der Faser bereitzustellen. Desweiteren kann nach der Erfindung ein direkt in einer optischen Faser gebildeter Photonenkristall einem photoelektrischen Element, zum Beispiel einer photoempfindlichen Widerstandsschicht, zugeordnet werden, um so elektrische Ausgangssignale aus dem optischen Verarbeitungssystem innerhalb der Faser abzuleiten. Auf der Faser angeordnete Linsen können verwendet werden, um Licht zu und von einem faser-integrierten Photonenkristall zu übertragen.

Weitere Gegenstände, besondere Kennzeichen und Vorteile der Erfindung werden anhand der nachfolgenden ausführlichen Beschreibung von exemplarischen Realisierungen der Erfindung und anhand der beigefügten Figuren ersichtlich.

### Kurze Beschreibung der Zeichnungen

- Figur 1:: Perspektivische Ansicht eines schmalbandigen Filters in einem grabenförmiger Einschnitt in eine optische Faser mit D-Profil; der Photonenkristall umfaßt dielektrische Stäbchen, die unter Einsatz von dreidimensionaler additiver Lithographie gebildet wurden.
- Figur 2:: Perspektivische Ansicht eines schmalbandigen Filters, bei dem der Photonenkristall gebildet wird, indem man direkt in der optischen Faser im wesentlichen zylindrische Löcher herstellt.
- Figur 3:: Ansicht eines Endes einer runden optischen Faser, die einen in ihrem Innern angeordneten elektrisch veränderbaren Photonenkristall hat.
- Figur 4:: Seitenansicht der runden optischen Faser und des Photonenkristalls von Figur 3.
- Figur 5:: Ansicht von oben auf einen Photonenkristall in einer optischen Faser, die eine auf ihrem Umfang gebildete Linse hat.
- Figur 6:: Ansicht von oben auf einen Photonenkristall in einer optischen Faser, die eine auf ihrem Umfang angeordnete photoelektrische Schicht hat.
- Figur 7:: Perspektivische Ansicht einer optischen Faser, die mehrere Photonenkristalle und andere Elemente hat, zum Beispiel eine photoelektrische Schicht und einen Film mit gleichem Brechungsindex, die in ihrem Inneren gebildet wurden.

### Wege zur Ausführung der Erfindung

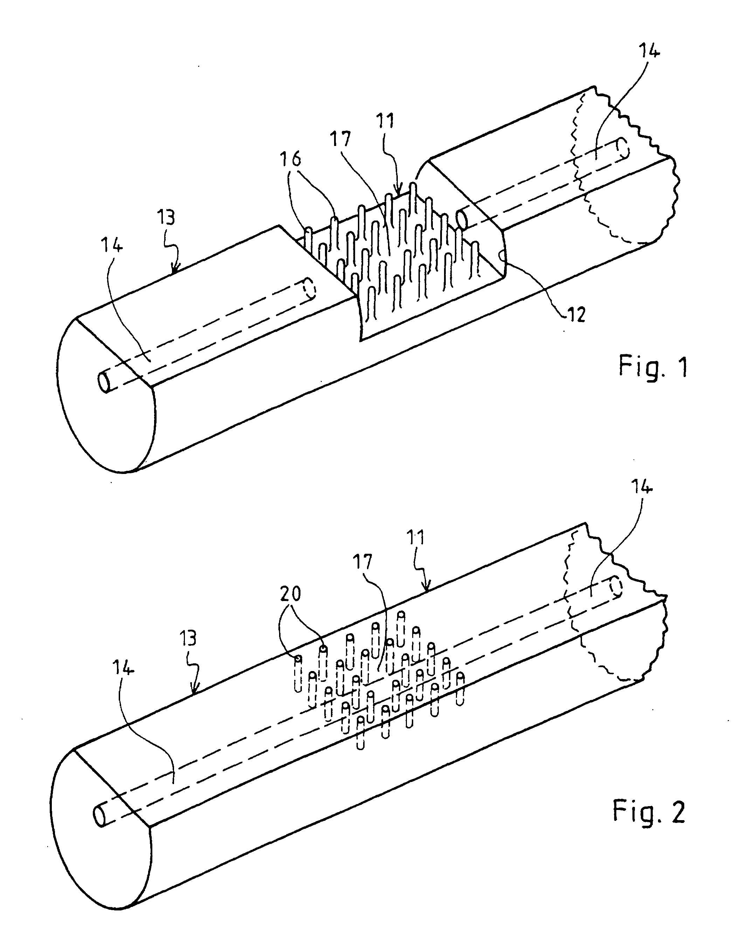

Figur 1: Ein Photonenkristall 11 wird in einem grabenförmigen Einschnitt 12 in einer optischen Faser 13 mit einem Faserkern 14 gebildet. Der Photonenkristall 11 umfaßt mehrere dielektrische Stäbchen 16, die in diesem Fall in einer rechtwinkligen Matrix mit einem Defekt, in diesem Fall das Nichtvorhandensein eines dielektrischen Stäbchens, in der Mitte 17 der Anordnung angeordnet sind. Der Photonenkristall 11 in der abgebildeten Konfiguration umfaßt ein schmalbandiges Filter. Im generellen Fall können die Zwischenräume zwischen den dielektrischen Stäbchen 16 auf Wunsch zur Erhöhung der Festigkeit mit amorphem oder mikrokristallinem Polymer hinterfüllt werden; jedoch kann die Erfindung auch ohne Hinterfüllung in die Praxis umgesetzt werden, falls dies gewünscht wird. Der grabenförmige Einschnitt 12 kann sich über einige wenige Mikrometer über die Länge der Faser 13 erstrecken. Er kann in der Faser durch den Einsatz von Lithographie, Trockenoder Naß-Ätztechnik oder durch Laser- oder Ionenablation gebildet werden. Bei der optischen Faser 13 in Figur 1 handelt es sich um eine Faser mit D-Profil, in der das Licht durch den monomodalen Kern 14 nahe an der geraden Oberfläche übertragen wird; das ürsprüngliche D-Profil der Faser gestattet ein einfaches Entfernen des Materials, um einen angemessenen grabenförmigen Einschnitt zu bilden.

Figur 2: Bei einer weiteren Realisierung der Erfindung wird ein Photonenkristall 11 direkt in der optischen Faser 13 gebildet, indem einfach mehrere im wesentlichen zylindrische Löcher 20 in einem definierten geometrischen Muster in das optische Fasermaterial gebohrt werden. Der Photonenkristall 11 in Figur 2 ist ein schmalbandiges Filter (ähnlich dem in Figur 1), wobei der Defekt darin besteht, daß in der Mitte 17 der Matrix kein Loch vorhanden ist. Somit wird nach der Erfindung ein Photonenkristall direkt in eine optische Faser plaziert, wobei die Art der Ausführung in Bezug auf die Erfindung nicht relevant ist.

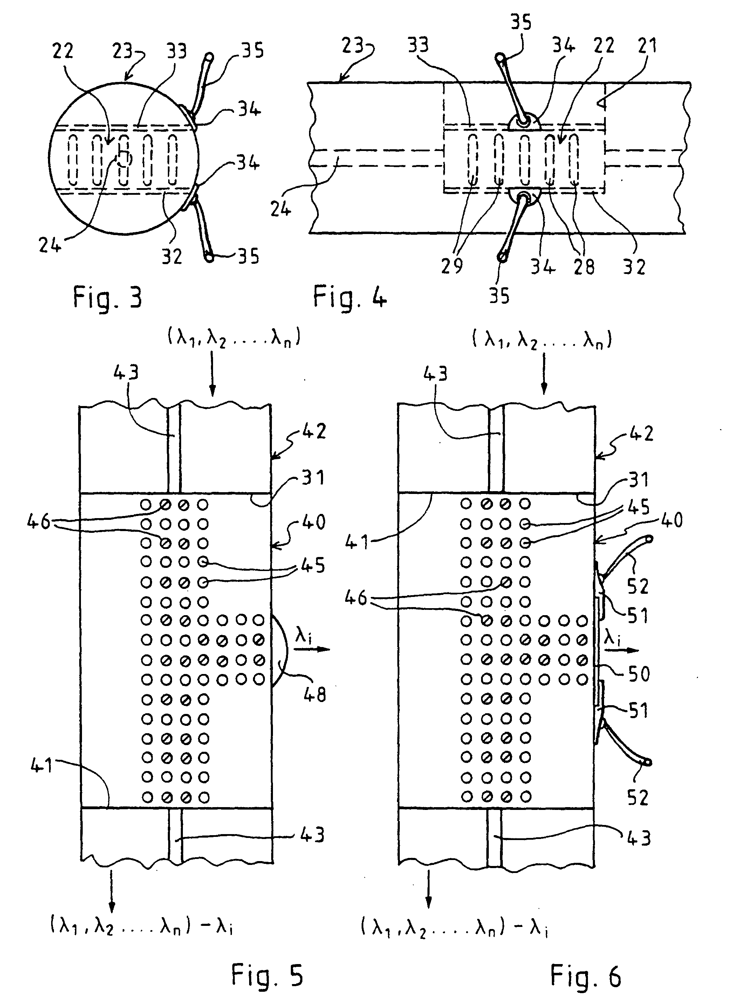

Figur 3 und 4: Der Photonenkristall 22 wird in einer runden optischen Faser 23 gebildet. Der Photonenkristall 22 kann in einem grabenförmigen Einschnitt 27 (wie in Figur 1) gebildet werden, wobei die Zwischenräume 28 zwischen den dielektrischen Stäbchen 29 teilweise oder ganz mit nichtlinearem optischem Werkstoff gefüllt sind. Vor der Bildung der Photonenkristalle 22 wird auf dem Boden des grabenförmigen Einschnitts 27 eine elektrisch leitende Schicht 32 bereitgestellt, die sich im wesentlichen über das Gesamtausmaß erstreckt, das der Photonenkristall 22 einnehmen wird. Nach dem Füllen mit nichtlinearem optischen Werkstoff wird eine weitere elektrisch leitende Schicht 33 gebildet. Die Schichten 32 und 33 enden extern in Kontaktstellen 34, an die elektrische Anschlußdrähte 35 mittels Wire-Bonding-Technik angebracht werden können. Durch Änderung des elektrischen Feldes zwischen den leitfähigen Schichten 32, 33 werden die optischen Eigenschaften, insbesondere die Brechzahlen, der verschiedenen Teile des Photonenkristalls 22 verändert, wodurch sich die Kenndaten oder die kritischen Wellenlängen der Vorrichtungen so ändern, wie es in der deutschen Patentanmeldung 195 42 058.6 vom 10. November 1995 offenbart wird. Aus Figur 3 und 4 geht außerdem hervor, daß die vorliegende Erfindung, mit der Photonenkristalle direkt in optischen Fasern gebildet werden, sowohl in runden optischen Fasern als auch in in solchen mit D-Profil in die Praxis umgesetzt werden kann.

Statt Elektroden und eine veränderbare Spannung zum Abstimmen des nichtlinearen optischen Werkstoffes zu verwenden, kann man den nichtlinearen optischen Werkstoff auch mit Licht aus einer externen Lichtquelle durchfluten, indem man wie in unserem früheren gleichzeitig anhängigen Antrag Linsen verwendet oder indem man ihn parallel zum Kern und außerhalb des Kerns der optischen Faser beleuchtet, ähnlich wie es in bekannter Weise bei optisch gepumpten Lasern gemacht wird.

Figur 5: Ein Photonenkristall 40 wird in einem grabenförmigen Einschnitt 41 einer optischen Faser 42 gebildet, die einen Kern 43 hat. Der Photonenkristall 40 umfaßt Säulen mit unterschiedlicher Brechzahl 45, die entweder dielektrische Stäbchen (16 in Figur 1) oder Löcher (20 in Figur 2) umfassen können, die in Figur als leere Kreise dargestellt sind. Die Defekte werden in Figur 5 in Form von durchgestrichenen Kreisen 46 angegeben. Das Muster in Figur 5 soll keine besondere Funktion darstellen, sondern lediglich Photonenkristalle im Allgemeinen veranschaulichen. Es kann jedoch ein derartiges Muster vorgelegt werden, mit dem eine Drop-Funktion (oder, weil ja die optischen Bauelemente reversibel sind, eine Add-Funktion) zur Verfügung gestellt wird, in der Licht mit einer bestimmten Frequenz i durch einen rechten Winkel gesteuert werden kann, um durch eine Linse 48 hindurchzutreten, die direkt auf der Seite der optischen Faser 42 gebildet wird, und zwar unter Verwendung des Trockenlackverfahrens, das in der deutschen Patentanmeldung 195 31 860.9 vom 30. August 1995 offenbart wurde, oder unter Verwendung von Prinzipien aus der deutschen Patentanmeldung 197 13 374.6 vom 29. März 1997, oder der entsprechenden US-Patentanmeldung Serial No. 08/883,066, eingereicht am 18. Dezember 1997. Das durch die Linse 48 aus dem Photonenkristall 40 austretende (oder in ihn eintretende) selektierte Licht wird durch eine ähnliche Linse auf der Seite einer anderen optischen Faser in diese andere optische Faser geleitet oder es kann am Ende einer optischen Faser oder ähnlichem fokussiert werden. Die Art der Verwendung von Licht, das durch einen Photonenkristall verarbeitet wurde, ist belanglos für die Erfindung, da es sich bei der Erfindung um die Plazierung des Photonenkristalls direkt in einer optischen Faser handelt.

Figur 6: Bei einem weiteren Verfahren zur Verwendung von Licht, das durch einen Photonenkristall verarbeitet wurde, ist eine an der Kante der optischen Faser 42 gebildete Photowiderstandsschicht 50 inbegriffen, die elektrisch mit Kontaktstellen 51 in Verbindung steht, auf die elektrische Anschlußdrähte mittels Wire-Bond-Technik aufgebracht werden können. Auf diese Weise werden von der Photowiderstandsschicht 50 elektrische Signale geliefert, die die Stärke der von dem Photonenkristall 40 extrahierten Wellenlänge angeben, so wie es in der deutschen Patentanmeldung 196 21 175.1 vom 24. März 1996 offenbart wurde.

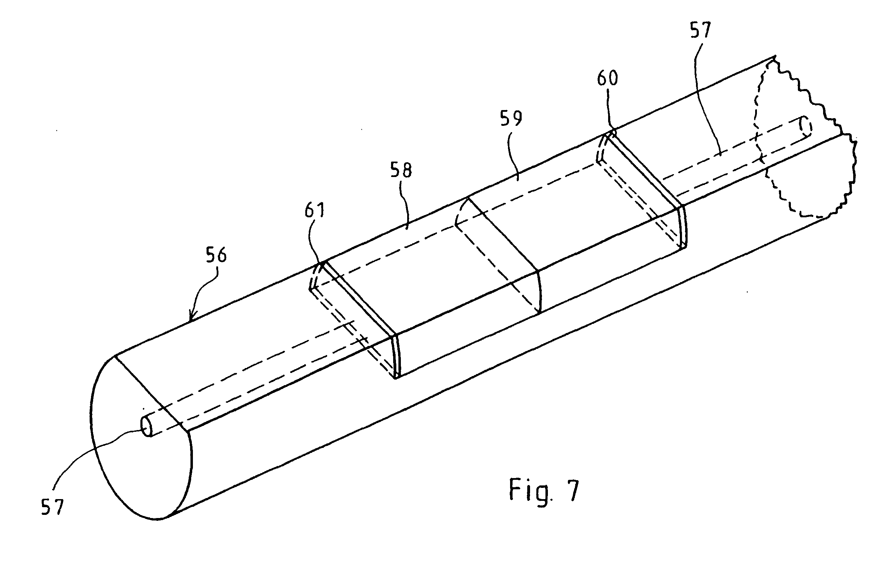

Figur 7: Eine optische Faser mit D-Profil 56 und einem in ihr enthaltenen Kern 57 ist mit mehreren Photonenkristallen 58, 59 sowie mit einer Photowiderstandsschicht 60 direkt im Weg des Lichts im Innern der optischen Faser 56 versehen. In diesem Fall dient die Photowiderstandsschicht 60 zur Messung der Größe des in der Faser verbleibenden Lichts. Die elektrischen Anschlüsse für die Schicht 60 sind in Figur 7 zur besseren Übersichtlichkeit weggelassen worden. Von größerer Bedeutung ist, daß eine zusätzliche Beschichtung oder Schicht 51 von Photonenstäbchenmaterial, zum Beispiel geeignetes, entsprechend dotiertes Polymer, spezielle Abschwächungs- oder Verringerungsfunktionen, insbesondere zur Brechindexanpassung, bieten kann, um Reflexionen an der Schnittstelle zwischen Faser und Kristall zu verringern. Solche Schichten können auch hinter dem Kristall (dort, wo die Schicht 60 abgebildet ist) oder zwischen den Kristallen sein. Die vorliegende Erfindung, mit der die Photonenkristalle entweder einzeln oder in Kombination mit anderen Photonenkristallen oder optischen oder optoelektronischen Elementen oder Schichten direkt im Innern einer optischen Faser gebildet werden, kann auf sehr komplexe Weise durch das Bereitstellen derartiger optischer Vorrichtungen in zwei oder mehreren Fasern kombiniert werden und zwischen diesen Licht koppeln und in bestimmten Fällen das Licht nach getrennt erfolgter Verarbeitung wieder zusammenführen. Anders ausgedrückt liefert die Erfindung die Mittel, nämlich Photonenkristalle im Innern von Faseroptiken, um sehr komplexe optische Systeme in mikrominiaturisierter Form herzustellen.

## Patentansprüche

1. Optische Faser, die einen grabenförmigen Einschnitt aufweist, in dem ein Photonenkristall (11, 22) gebildet ist.

2. Optische Faser nach Anspruch 1, bei welcher der Photonenkristall (11, 22) mehrere dielektrische Stäbchen (16) umfaßt.

3. Optische Faser nach Anspruch 2, bei der die Zwischenräume zwischen den dielektrischen Stäbchen (16) zur Unterstützung mit amorphem Polymerwerkstoff gefüllt sind.

4. Optische Faser nach Anspruch 2, bei der die Zwischenräume (28) zwischen den dielektrischen Stäbchen (29) einen, nichtlinearen optischen Werkstoff enthalten.

5. Optische Faser nach Anspruch 4, die ferner ein Paar Elektroden (32, 33) umfaßt, die nahe bei gegenüberliegenden Enden der dielektrischen Stäbchen (29) angeordnet sind, um an den nichtlinearen optischen Werkstoff ein elektrisches Feld anzulegen und dadurch die Kenndaten des Photonenkristalls (22) zu verändern.

6. Optische Faser nach Anspruch 4, bei der die Kenndaten des Photonenkristalls (22) durch selektive Beleuchtung des nichtlinearen optischen Werkstoffs mit Licht veränderbar sind.

7. Optische Faser, die einen Bereich aufweist, in dem ein Photonenkristall (11) dadurch gebildet ist, daß mehrere Löcher (20) in einem definierten Muster im wesentlichen senkrecht zum Faserkern in dem Fasermaterial angebracht sind.

8. Optische Faser nach einem der vorhergehenden Ansprüche, die eine Photowiderstandsschicht (50) zum Messen der Größe des durch einen Teil des Photonenkristalls (40) hindurchgehenden Lichts enthält.

9. Optische Faser nach Anspruch 8, bei der die Photowiderstandsschicht (50) auf einer Fläche der optischen Faser (42) ausgebildet ist, um die Größe des Lichts zu messen, das zwischen der Fläche und einem Teil des Photonenkristalls (40) hindurchtritt.

10. Optische Faser nach Anspruch 8, bei der die Photowiderstandsschicht direkt im Weg des Lichts im Innern der optischen Faser gebildet ist.

11. Optische Faser nach einem der Ansprüche 1 oder 7, die einen zweiten Photonenkristall (59) enthält, der in der Nachbarschaft des ersten Photonenkristalls (58) in der optischen Faser (56) angeordnet ist.

12. Optische Faser nach Anspruch 1, bei welcher der Photonenkristall zusammen mit mindestens einem weiteren Photonenkristall, nichtlinearen optischen Vorrichtungen und Photowiderständen eine optische Meßvorrichtung zum Messen bestimmter Kenndaten des Lichts in einem grabenförmigen Einschnitt in der Faser bildet, zum Beispiel Polarisierung, Amplitude und/oder Pulsfolge.

13. Optische Faser nach einem der Ansprüche 1 oder 7, die eine Linse (48) zum Fokussieren des Lichts enthält, das zwischen der Oberfläche der optischen Faser (42) und einem Teil des Photonenkristalls (40) hindurchtritt.

14. Optische Faser nach Anspruch 1, die eine Schicht aus dem Werkstoff des Photonenkristalls an einer Schnittstelle zwischen dem Kristall und der Faser im Lichtweg enthält.

15. Optische Faser nach einem der Ansprüche 1 oder 7, die ein D-Profil aufweist.

16. Optische Faser nach einem der Ansprüche 1 oder 7, die ein rundes Profil aufweist.

## Claims

1. Optical fibre having a trench-shaped incision in which a photon crystal (11, 22) is formed.

2. Optical fibre according to claim 1 in which the photon crystal (11, 22) comprises a plurality of small dielectric rods (16).

3. Optical fibre according to claim 2 in which the spaces between the small dielectric rods (16) are filled with amorphous polymer material for support.

4. Optical fibre according to claim 2 in which the spaces (28) between the small dielectric rods (29) contain a nonlinear optical material.

5. Optical fibre according to claim 4, said optical fibre additionally comprising a pair of electrodes (32, 33) disposed close to opposite ends of the small dielectric rods (29) in order to apply an electric field to the nonlinear optical material and thereby to change the characteristic data of the photon crystal (22).

6. Optical fibre according to claim 4 in which the characteristic data of the photon crystal (22) are changeable through selective exposure of the nonlinear optical material to light.

7. Optical fibre having a region in which a photon crystal (11) is formed in that a plurality of holes (20) are made in the fibre material in a defined pattern substantially perpendicular to the fibre core.

8. Optical fibre according to any one of the preceding claims, said optical fibre containing a photoresistive layer (50) for measuring the magnitude of the light passing through a portion of the photon crystal (40).

9. Optical fibre according to claim 8 in which the photoresistive layer (50) is formed on a surface of the optical fibre (42) in order to measure the magnitude of the light passing between the surface and a portion of the photon crystal (40).

10. Optical fibre according to claim 8 in which the photoresistive layer (50) is formed directly in the path of the light in the interior of the optical fibre.

11. Optical fibre according to any one of claims 1 or 7, said optical fibre containing a second photon crystal (59) disposed in the optical fibre (56) in the vicinity of the first photon crystal (58).

12. Optical fibre according to claim 1 in which, together with at least one further photon crystal, nonlinear optical devices and photoresistors, the photon crystal forms an optical measuring device for measuring certain characteristic data of the light in a trench-shaped incision in the fibre, such as polarization, amplitude and/or pulse frequency.

13. Optical fibre according to any one of claims 1 or 7, said optical fibre containing a lens (48) for focusing the light passing between the surface of the optical fibre (42) and a portion of the photon crystal (40).

14. Optical fibre according to claim 1, said optical fibre containing a layer of the material of the photon crystal at an interface between the crystal and the fibre in the light path.

15. Optical fibre according to any one of claims 1 or 7, said optical fibre having a D-profile.

16. Optical fibre according to any one of claims 1 or 7, said optical fibre having a round profile.

## Revendications

1. Fibre optique présentant une rainure longitudinale dans laquelle est disposé un cristal photonique (11, 22).

2. Fibre optique selon la revendication 1, dans laquelle le cristal photonique (11, 22) comprend plusieurs tiges diélectriques (16).

3. Fibre optique selon la revendication 2, dans laquelle les espaces entre les tiges diélectriques (16) sont remplis pour consolidation d'un matériau polymère amorphe.

4. Fibre optique selon la revendication 2, dans laquelle les espaces (28) entre les tiges diélectriques (29) contiennent un matériau optique non linéaire.

5. Fibre optique selon la revendication 4, comprenant en outre une paire d'électrodes (32, 33) disposées à proximité d'extrémités opposées des tiges diélectriques (29) afin d'appliquer un champ électrique sur le matériau optique non linéaire et de modifier par là les paramètres du cristal photonique (22).

6. Fibre optique selon la revendication 4, dans laquelle les paramètres du cristal photonique (22) peuvent être modifiés par éclairage sélectif du matériau optique non linéaire.

7. Fibre optique présentant un espace dans lequel un cristal photonique (11) est formé par le fait que plusieurs orifices (20) sont pratiqués dans le matériau de la fibre selon un schéma défini, essentiellement perpendiculairement au coeur de la fibre.

8. Fibre optique selon l'une des revendications précédentes, comprenant une couche photorésistante (50) pour mesurer l'importance de la lumière traversant une partie du cristal photonique (40).

9. Fibre optique selon la revendication 8, dans laquelle la couche photorésistante (50) est disposée sur une surface de la fibre optique (42) pour mesurer l'importance de la lumière qui pénètre entre la surface et une partie du cristal photonique (40).

10. Fibre optique selon la revendication 8, dans laquelle la couche photorésistante est disposée directement sur le trajet de la lumière à l'intérieur de la fibre optique.

11. Fibre optique selon l'une des revendications 1 ou 7, contenant un deuxième cristal photonique (59), disposé à proximité du premier cristal photonique (58) dans la fibre optique (56).

12. Fibre optique selon la revendication 1, dans laquelle le cristal photonique constitue, associé à au moins un autre cristal photonique, à des dispositifs optiques non linéaires et à des photorésistances, un dispositif optique de mesure de paramètres déterminés de la lumière dans une rainure longitudinale pratiquée dans la fibre, par exemple polarisation, amplitude et/ou fréquence des impulsions.

13. Fibre optique selon l'une des revendications 1 ou 7, comprenant une lentille (48) pour focalisation de la lumière qui pénètre entre la surface de la fibre optique (42) et une partie du cristal photonique (40).

14. Fibre optique selon la revendication 1, comprenant une couche du matériau du cristal photonique sur le trajet de la lumière, à une interface entre le cristal et la fibre.

15. Fibre optique selon l'une des revendications 1 ou 7, présentant un profil en D.

16. Fibre optique selon l'une des revendications 1 ou 7, présentant un profil rond.
